(19) Europäisches Patentamt / European Patent Office / Office européen des brevets

(11) **EP 3 499 271 A1**

(12) **EUROPÄISCHE PATENTANMELDUNG**

(43) Veröffentlichungstag:
**19.06.2019  Patentblatt 2019/25**

(51) Int Cl.:
*G01S 19/50* (2010.01)     *G01S 19/39* (2010.01)
*G01C 21/30* (2006.01)

(21) Anmeldenummer: **18211300.1**

(22) Anmeldetag: **10.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.12.2017   DE 102017223058**

(71) Anmelder: **Siemens Aktiengesellschaft**
**80333 München (DE)**

(72) Erfinder:
• **Nourani-Vatani, Navid**
 **12489 Berlin (DE)**
• **Palmer, Andrew**
 **10965 Berlin (DE)**

(54)   **ERMITTLUNG EINER POSITION EINES FAHRZEUGS**

(57)   Es wird ein Verfahren zur Ermittlung einer Position (P(t)) eines Fahrzeugs (40) beschrieben. Bei dem Verfahren wird eine Echtzeitmessung mindestens einer mit einer Krümmung (K) eines aktuellen Abschnitts einer von dem Fahrzeug zurückgelegten Trajektorie korrelierten physikalischen Größe (a, ω, v, P_{SN}(t)) durchgeführt. Weiterhin wird eine Krümmung des aktuellen Abschnitts der Trajektorie des Fahrzeugs (40) auf Basis der mindestens einen physikalischen Größe (a, ω, v, P_{SN}(t)) ermittelt. Schließlich wird eine Position (P(t)) des Fahrzeugs (40) auf einer Karte (GK) durch Vergleich von Krümmungen von auf der Karte (GK) eingezeichneten Kurven mit der ermittelten Krümmung (K) ermittelt. Es wird auch ein Positionsermittlungssystem (30) beschrieben. Über diese wird ein Fahrzeug (40) beschrieben.

FIG 1

**Beschreibung**

Die Erfindung betrifft ein Verfahren zur Ermittlung einer Position eines Fahrzeugs. Überdies betrifft die Erfindung ein Positionsermittlungssystem.

Die Ermittlung der Position eines Fahrzeugs ist entscheidend für einen sicheren Betrieb des Fahrzeugs. Dies gilt insbesondere für halb- oder vollautomatisiert gesteuerte Straßenfahrzeuge und Schienenfahrzeuge. Diese Fahrzeuge nutzen unterschiedliche bordseitige Sensoren, wie z.B. Drehzahlmesser, Dopplerradar, Satellitennavigationssysteme, Balise-Detektoren usw., um ihre Position zu ermitteln. Diese Sensoren können jedoch unter bestimmten Umweltbedingungen unzuverlässig oder gar unbenutzbar sein.

Herkömmlich werden Positionsbestimmungen mit Hilfe von Sensoren durchgeführt, die eine globale Information, wie z.B. ein Satellitennavigationssignal, nutzen. Wenn das Satellitennavigationssignal nicht verfügbar oder ungenau ist, oder aus Redundanzgründen, muss jedoch eine andere Form einer globalen Orientierungshilfe genutzt werden. Das können z.B. Balisen für Schienenfahrzeuge oder Landmarken sein, die durch visuelle Sensoren, Lasersensoren oder Radarsensoren detektiert werden können. Zwischen einzelnen Landmarken wird die zurückgelegte Distanz mit Hilfe einer Geschwindigkeitsschätzung eines odometrischen Systems ermittelt. Allerdings wird eine solche Positionsbestimmung immer ungenauer, je weiter ein Fahrzeug sich von der zuletzt passierten Landmarke entfernt. Bei Schienenfahrzeugen müssen an Weichen zusätzliche Balisen aufgestellt werden, um zu ermitteln, welche Abzweigung ein Schienenfahrzeug nimmt. Der zusätzliche Aufwand ist aufgrund der hohen Anzahl von Weichen mit hohen Kosten verbunden. Insbesondere bei Fahrzeugen im Straßenverkehr kann es auch leicht zu Uneindeutigkeiten kommen, so dass nicht eindeutig bekannt ist, auf welcher Straße bzw. auf welchem Weg sich das Fahrzeug aktuell befindet.

Häufig basieren Positionsbestimmungssysteme auf der Nutzung von geographischen Karten. Beispielsweise werden Satellitennavigationssysteme genutzt, um zu ermitteln, an welcher Stelle sich ein Fahrzeug gerade befindet und die ermittelte Position in einer geographischen Karte angezeigt. In die Positionsbestimmung können zusätzlich Messungen von anderen Sensoren, wie z.B. Kameras bei Straßenfahrzeugen und Balisen bei Schienenfahrzeugen, integriert werden. Allerdings kann es bei der Positionsbestimmung zu Doppeldeutigkeiten kommen, wobei nicht eindeutig klar ist, auf welchem Weg sich ein Fahrzeug befindet, da die Ungenauigkeit bei der Positionsbestimmung größer ist als der Abstand zwischen parallel verlaufenden Straßen oder Schienensträngen.

In US 7,756,634 B2 wird eine aktuelle Position eines Fahrzeugs auf Basis von Azimutwinkeln eines Fahrzeugs an unterschiedlichen Positionen ermittelt.

In US 2007/ 0 078 594 A1 wird eine Richtungsänderung auf Basis einer Änderung des Azimuts eines Fahrzeugs ermittelt.

In DE 692 19 006 T2 wird eine Kartenanpassung auf Basis von Entfernungsmessungen, Messungen der Orientierung und einer Abschätzung einer Momentanposition eines Fahrzeugs im Hinblick auf eine Referenzposition vorgenommen.

In DE 198 30 331 B4 werden in einem Karteninformationsspeichermittel gespeicherte Wegedaten auf der Grundlage eines zustandsgeänderten Azimutwinkels und einer Position eines Fahrzeugs korrigiert.

In US 6,473,690 B1 werden Verfahren zum Vergleichen von Raumkurven beschrieben. Diese werden genutzt, um einen Kartenabgleich in einem Fahrzeugnavigationssystem durchzuführen.

In US 9,733,092 B2 wird eine Richtungsabweichung eines Fahrzeugs auf Basis von virtuellen Verbindungen zwischen einem Startpunkt und einem Endpunkt ermittelt.

In WO 2016/ 153 435 A1 wird ein Positionsermittlungsverfahren beschrieben, bei dem eine Position durch Abgleichen einer durch einen inertialen Kurvensensor ermittelten Kurvenkrümmung mit Kartendaten bestimmt wird.

Es besteht also die Aufgabe, ein Verfahren und eine Vorrichtung zur Ermittlung der Position eines Fahrzeugs zu entwickeln, mit dem eine korrekte Positionsbestimmung ermöglicht wird.

Diese Aufgabe wird durch ein Verfahren zur Ermittlung einer Position eines Fahrzeugs gemäß Patentanspruch 1, ein Positionsermittlungssystem gemäß Patentanspruch 10 und ein Fahrzeug gemäß Patentanspruch 11 gelöst.

Bei dem erfindungsgemäßen Verfahren zur Ermittlung einer Position eines Fahrzeugs wird eine Echtzeitmessung mindestens einer mit einer Krümmung eines aktuellen Abschnitts einer von dem Fahrzeug zurückgelegten Trajektorie korrelierten physikalischen Größe, welche Positionsinformationen eines Satellitennavigationssystems umfasst, durchgeführt. Als aktueller Abschnitt der Trajektorie des Fahrzeugs soll der zuletzt zurückgelegte Abschnitt der von dem Fahrzeug gefahrenen Trajektorie verstanden werden. Ein solcher Abschnitt umfasst auf jeden Fall die aktuelle Position des Fahrzeugs. Er kann zusätzlich auch eine Mehrzahl von zuletzt ermittelten Positionen des Fahrzeugs enthalten. Auf Basis der mindestens einen physikalischen Größe wird dann die Krümmung bzw. ein Krümmungswert der Krümmung des aktuellen Abschnitts der Trajektorie des Fahrzeugs durch Anpassen einer Ausgleichskurve an eine Mehrzahl von mit Hilfe des Satellitennavigationssystems ermittelten Positionen des Fahrzeugs ermittelt. Schließlich wird eine Position des Fahrzeugs auf einer vorab gespeicherten Karte durch Vergleich von Krümmungswerten von auf der Karte eingezeichneten Fahrwegen mit der ermittelten Krümmung des aktuellen Abschnitts der Trajektorie des Fahrzeugs ermittelt. Als Karte soll, wie üblich, ein die Erdoberfläche bzw. einen Teil

davon darstellendes digitales oder analoges Medium verstanden werden. Die Karte kann z.B. als geographische Karte, topologische Karte, bevorzugt als Straßenkarte ausgebildet sein, welche von dem Fahrzeug nutzbare Fahrwege umfasst. Bei dem Vergleich wird ein Fahrweg auf der Karte gesucht, der an einer Stelle die durch Messung ermittelte Krümmung bzw. denselben Krümmungswert aufweist. Es wird dann die dem Krümmungswert zugeordnete Position auf der Karte als die korrekte Position des Fahrzeugs identifiziert. Insbesondere parallel verlaufende gekrümmte Fahrwege weisen meist unterschiedliche Krümmungswerte auf, so dass in diesem Fall auf Basis des ermittelten Krümmungswertes leicht der korrekte Fahrweg ermittelt werden kann.

Sinnvollerweise wird der aktuelle Abschnitt der Trajektorie des Fahrzeugs nicht zu groß gewählt, damit dem Abschnitt ein aktueller Krümmungswert zugeordnet werden kann, aus dem in Echtzeit eine aktuelle Position des Fahrzeugs ermittelt werden kann. Die als Vergleichswerte genutzten Krümmungswerte aus der Karte können unterschiedlichen Fahrwegen zugeordnet sein, sie können aber auch unterschiedlichen Positionen desselben Fahrwegs auf der Karte zugeordnet sein. Sinnvollerweise wird der Vergleich mit Krümmungen von Fahrwegen in der Karte auf einen Suchbereich eingeschränkt, dessen Position z.B. durch eine grob bekannte Position des Fahrzeugs ermittelbar ist.

Selbst wenn auf Basis des Krümmungswerts zunächst auf der Karte mehrere in Frage kommende Positionen des Fahrzeugs gefunden werden, kann diese Uneindeutigkeit durch eine oder mehrere zeitlich nachfolgende Messungen und Ermittlungen von Krümmungswerten vermieden werden, da ein gleichförmiger Verlauf unterschiedlicher Fahrwege über eine längere Strecke sehr unwahrscheinlich ist. Mithin kann derjenige Kandidatenfahrweg aus mehreren Kandidatenfahrwegen auf der Karte ausgewählt werden, dessen Streckenverlauf den mehreren zeitlich nacheinander gemessenen Krümmungswerten entspricht.

Die genannte Positionsermittlung erfolgt vorzugsweise in Kombination mit einem herkömmlichen Positionsbestimmungsverfahren, welches möglicherweise einen ungenauen Positionswert für das Fahrzeug ermittelt.

Vorteilhaft können dann aufgrund der ungenauen Positionsbestimmung durch das herkömmliche Positionsbestimmungsverfahren auftretende fehlerhafte Zuordnungen zu parallel verlaufenden Fahrwegen durch die erfindungsgemäße Positionsermittlung korrigiert werden, so dass eine präzisere Positionsermittlung und Zuordnung zu Fahrwegen als bei herkömmlichen Positionsbestimmungsverfahren erfolgen kann. Die bei der herkömmlichen Positionsbestimmung auftretende grobe Positionsinformation kann zur Erleichterung der Suche nach geeigneten, in der Karte eingezeichneten Fahrwegen für den erfindungsgemäßen Vergleichsschritt genutzt werden. Weiterhin kann an Abzweigungen, beispielsweise bei dem Passieren eines Schienenfahrzeugs einer Weiche auf Basis der ermittelten Krümmung der Trajektorie des Fahrzeugs eine Abzweigungsrichtung ermittelt werden. Es kann also auf Basis der ermittelten Krümmung detektiert werden, welchen Weg das Schienenfahrzeug bei dem Überfahren der Weiche genommen hat. Überdies kann die ermittelte Krümmung dazu genutzt werden, bei der Lokalisierung des Fahrzeugs Sektoren mit Fahrwegen ohne Krümmung oder ohne vergleichbare Krümmungswerte auszuschließen.

Es wird auf Basis von Positionsinformationen eines Satellitennavigationssystems zunächst eine Krümmung einer Trajektorie eines Fahrzeugs an der aktuellen Position ermittelt und anschließend für eine Positionskorrektur genutzt, wobei die Positionskorrektur durch Vergleich des ermittelten Krümmungswertes mit Krümmungswerten von in einer Karte eingezeichneten Fahrwegen erfolgt. Vorteilhaft gehen in die Positionsermittlung mehrere, möglicherweise ungenaue ermittelte Punkte bzw. Positionen des Fahrzeugs mit ein, wobei zufällige Abweichungen durch eine Ausgleichsrechnung kompensiert werden.

Das erfindungsgemäße Positionsermittlungssystem weist eine Messeinheit zum Durchführen einer Echtzeitmessung mindestens einer mit einer Krümmung eines aktuellen Abschnitts einer von einem Fahrzeug zurückgelegten Trajektorie korrelierten physikalischen Größe, welche Positionsinformationen ($P_{SN}$) eines Satellitennavigationssystems umfasst, auf. Teil des erfindungsgemäßen Positionsermittlungssystems ist auch eine Krümmungsermittlungseinheit, welche zum Ermitteln einer Krümmung des aktuellen Abschnitts der Trajektorie des Fahrzeugs auf Basis der mindestens einen physikalischen Größe durch Anpassen einer Ausgleichskurve an eine Mehrzahl von mit Hilfe des Satellitennavigationssystems ermittelten Positionen des Fahrzeugs eingerichtet ist. Das erfindungsgemäße Positionsermittlungssystem weist auch eine Positionsermittlungseinheit zum Ermitteln einer Position des Fahrzeugs auf einer Karte durch Vergleich von Krümmungen bzw. Krümmungswerten von auf der Karte eingezeichneten Fahrwegen mit der ermittelten Krümmung bzw. dem ermittelten Krümmungswert auf. Das erfindungsgemäße Positionsermittlungssystem teilt die Vorteile des erfindungsgemäßen Verfahrens zur Ermittlung einer Position eines Fahrzeugs.

Das erfindungsgemäße Fahrzeug, vorzugsweise ein Kraftfahrzeug, weist das erfindungsgemäße Positionsermittlungssystem auf. Das erfindungsgemäße Fahrzeug teilt die Vorteile des erfindungsgemäßen Positionsermittlungssystems.

Einige Komponenten des erfindungsgemäßen Positionsermittlungssystems können zum überwiegenden Teil in Form von Softwarekomponenten ausgebildet sein. Dies betrifft insbesondere Teile der Krümmungsermittlungseinheit und der Positionsermittlungseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher in einem Fahrzeug vorhandene Rechnersysteme nach einer eventuellen Ergänzung durch zusätzliche Hardwareelemente, wie z.B. eine Messeinheit zum Messen mindestens einer physikalischen Größe, auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um alle Schritte des erfindungsgemäßen Verfahrens auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

Besonders genau lässt sich eine Position des Fahrzeugs mit Hilfe des erfindungsgemäßen Verfahrens ermitteln, wenn eine grobe Positionsangabe vorliegt und die Ungenauigkeit der groben Positionsangabe abgeschätzt werden kann. In diesem Fall kann auf der zum Vergleich herangezogenen Karte um die grob bekannte Position des Fahrzeugs ein Bereich festgelegt werden, in dem sich das Fahrzeug befinden muss. Bei dieser Variante werden nur Fahrwege bzw. Abschnitte von Fahrwegen auf der Karte für den durchgeführten Vergleich berücksichtigt, die in dem festgelegten Bereich verlaufen. Mithin kann der Vergleichsaufwand stark reduziert werden und aufgrund der geringeren Wahrscheinlichkeit von gleichen Krümmungswerten für unterschiedliche Fahrwege eine zuverlässigere Positionskorrektur vorgenommen werden.

In einer besonders bevorzugten Variante des erfindungsgemäßen Verfahrens zur Ermittlung einer Position eines Fahrzeugs umfasst die mindestens eine physikalische Größe eine die Bewegung des Fahrzeugs charakterisierende Größe. Vorteilhaft lässt sich aus dem dynamischen Verhalten des Fahrzeugs eine Information über die Krümmung des aktuellen Abschnitts der von dem Fahrzeug beschriebenen Trajektorie durch eine einfache Rechnung ermitteln.

In einer anderen Variante des erfindungsgemäßen Verfahrens zur Ermittlung einer Position eines Fahrzeugs umfasst die mindestens eine physikalische Größe eine die Position des Fahrzeugs charakterisierende Größe. Vorteilhaft können durch die Messung ermittelte grobe Positionsangaben in Kombination miteinander dazu genutzt werden, eine genauere Positionsbestimmung des Fahrzeugs durchzuführen, wobei auf Basis der groben Positionsangaben eine aktuelle Krümmung einer Trajektorie des Fahrzeugs ermittelt wird.

In einer Variante des erfindungsgemäßen Verfahrens zur Ermittlung einer Position eines Fahrzeugs werden als physikalische Größen die longitudinale Geschwindigkeit und die zentripetale Beschleunigung des Fahrzeugs gemessen und es wird die Krümmung des aktuellen Abschnitts der Trajektorie des Fahrzeugs durch Bilden eines Quotienten aus der zentripetalen Beschleunigung und dem Quadrat der longitudinalen Geschwindigkeit des Fahrzeugs ermittelt.

Bevorzugt wird die zentripetale Beschleunigung mit Hilfe einer der folgenden Messeinrichtungen ermittelt:

- ein Accelerometer,
- eine Schätzeinrichtung mit einem Kalman-Filter.

Kalman-Filter können dazu genutzt werden, einen Beschleunigungswert auf der Basis von Messungen einer Mehrzahl von Sensoren, beispielsweise von Beschleunigungsmessern, Sensoren zur Geschwindigkeitsmessung und Positionsbestimmung, zu ermitteln. Auf Basis eines Bewegungsmodells kann eine Schätzung einer Beschleunigung sogar auch dann vorgenommen werden, wenn zu bestimmten Zeitpunkten keine Beschleunigungsmesswerte vorliegen.

In einer Ausgestaltung des erfindungsgemäßen Verfahrens zur Ermittlung einer Position eines Fahrzeugs werden als physikalische Größen die longitudinale Geschwindigkeit und die Winkelgeschwindigkeit des Fahrzeugs gemessen und die Krümmung des aktuellen Abschnitts der Trajektorie des Fahrzeugs wird durch Bilden eines Quotienten aus der Winkelgeschwindigkeit des Fahrzeugs und der longitudinalen Geschwindigkeit des Fahrzeugs ermittelt. Ändert ein Fahrzeug seine Richtung während der Fahrt, so ergibt sich aus der Richtungsänderung des Schienenfahrzeugs bei einer aktuellen Fahrgeschwindigkeit eine Winkelgeschwindigkeit die bei dieser Variante zur Ermittlung einer aktuellen Krümmung der zurückgelegten Trajektorie des Fahrzeugs genutzt wird.

In einer praktikablen Variante des erfindungsgemäßen Verfahrens zur Ermittlung einer Position eines Fahrzeugs wird die Winkelgeschwindigkeit mit Hilfe einer der folgenden Messeinrichtungen ermittelt:

- ein Gyroskop,
- ein Magnetometer,
- eine Schätzeinrichtung mit einem Kalman-Filter.

Mit einem Gyroskop lässt sich eine Winkelgeschwindigkeit messen. Dagegen erfolgt bei der Messung mit einem Magnetometer eine Messung einer Winkelposition. Mit Hilfe eines Kalman-Filters lassen sich die Messdaten der unterschiedlichen Sensoren für eine Ermittlung einer Winkelgeschwindigkeit kombinieren.

Bevorzugt wird bei dem erfindungsgemäßen Verfahren zur Ermittlung einer Position eines Fahrzeugs auf Basis der ermittelten Krümmung des aktuellen Abschnitts der Trajektorie des Fahrzeugs ermittelt, welchen Weg das Fahrzeug an einer Abzweigung nimmt. Beispielsweise wird ermittelt, über welche Spur ein Schienenfahrzeug eine Weiche verlässt. Vorteilhaft kann eine Unklarheit darüber, welchen Weg ein Fahrzeug an einer Abzweigung nimmt, überwunden werden. Eine solche Unklarheit kann durch eine ungenaue Positionsbestimmung durch ein globales Positionsbestimmungssystem oder ein anderes herkömmliche Positionsbestimmungssystem resultieren. Vorteilhaft kann mit Hilfe des erfindungsgemäßen Verfahrens eine Fehlsteuerung oder ein Defekt einer solchen Weiche sofort erkannt werden und gegebenenfalls ein Eingriff in den Fahrbetrieb vorgenommen werden, um Unfälle zu vermeiden.

Die Erfindung wird im Folgenden unter Hinweis auf die beigefügten Figuren anhand von Ausführungsbeispielen noch einmal näher erläutert. Es zeigen:

FIG 1 ein Flussdiagramm, welches ein Verfahren zum Ermitteln einer Position eines Fahrzeugs gemäß einem ersten Ausführungsbeispiel der Erfindung veranschaulicht,

FIG 2 ein Flussdiagramm, welches ein Verfahren zum Ermitteln einer Position eines Fahrzeugs gemäß einem zweiten Ausführungsbeispiel der Erfindung veranschaulicht,

FIG 3 ein Blockdiagramm, welches ein Positionsermittlungssystem gemäß einem Ausführungsbeispiel der Erfindung veranschaulicht,

FIG 4 ein Blockdiagramm, welches ein Fahrzeug mit einem Positionsermittlungssystem gemäß einem Ausführungsbeispiel der Erfindung veranschaulicht.

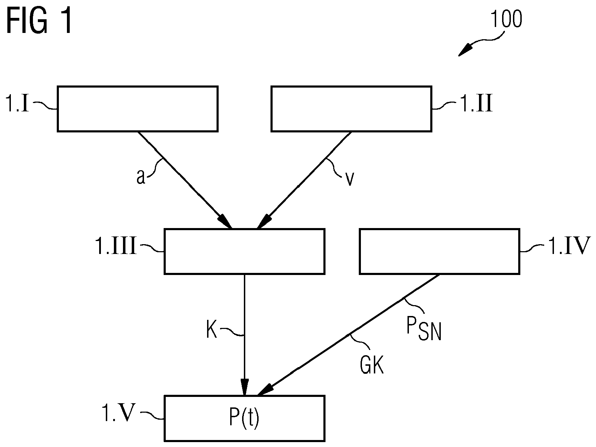

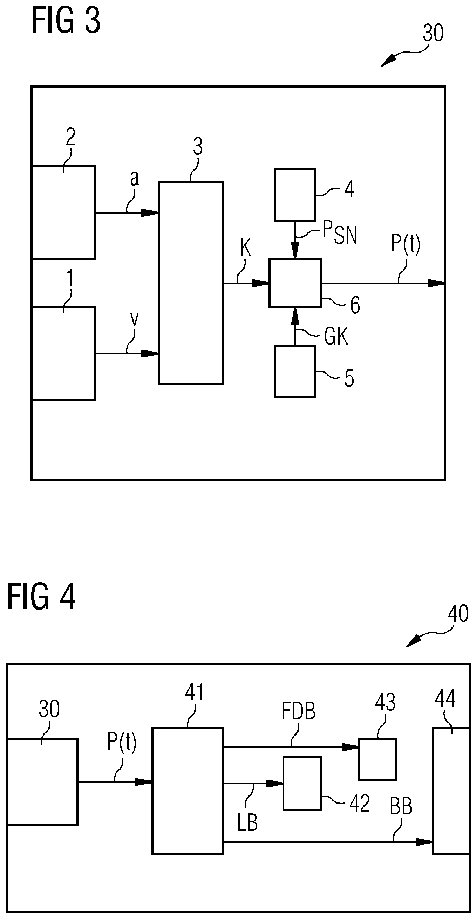

In FIG 1 ist ein Flussdiagramm gezeigt, mit dem ein Verfahren zur Ermittlung einer Position eines Fahrzeugs 40 (siehe FIG 4) gemäß einem ersten Ausführungsbeispiel der Erfindung veranschaulicht wird. Bei dem Schritt 1.I wird von einem Beschleunigungssensor des Fahrzeugs 40 ein zentripetaler Beschleunigungswert a zu einem Zeitpunkt t gemessen. Zu demselben Zeitpunkt t wird bei dem Schritt 1.II eine Geschwindigkeit v des Fahrzeugs 40 gemessen. Auf Basis des Beschleunigungswerts a und der Geschwindigkeit v wird bei dem Schritt 1.III ein Krümmungswert K eines von dem Fahrzeug 40 aktuell befahrenen Trajektorienabschnitts ermittelt. Die Kurvenkrümmung K ergibt sich wie folgt:

$$K = \frac{a}{v^2} \ .$$

Bei dem Schritt 1.IV wird zusätzlich mit Hilfe eines Satellitennavigationssystems ein grober aktueller Positionswert $P_{SN}$ des Fahrzeugs 40 ermittelt sowie eine geographische Karte GK von einem Bereich um den groben aktuellen Positionswert $P_{SN}$ bereitgestellt. Bei dem Schritt 1.V wird schließlich durch einen Vergleich der ermittelten Krümmung K des von dem Fahrzeug 40 aktuell befahrenen Trajektorienabschnitts mit Krümmungswerten von Fahrwegen in dem Bereich um den groben aktuellen Positionswert $P_{SN}$ eine exakte aktuelle Position P(t) des Fahrzeugs 40 ermittelt. Die beschriebenen Schritte 1.I bis 1.V können während der Fahrt des Fahrzeugs beliebig oft wiederholt werden.

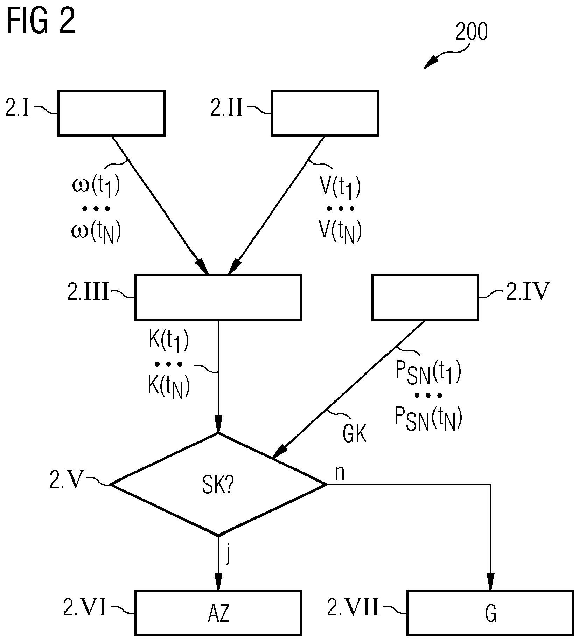

In FIG 2 ist ein Flussdiagramm 200 gezeigt, mit dem ein Verfahren zur Ermittlung einer Position eines Schienenfahrzeugs gemäß einem zweiten Ausführungsbeispiel der Erfindung veranschaulicht wird. Bei dem Schritt 2.I werden Winkelgeschwindigkeitswerte $\omega(t_1), ..., \omega(t_N)$ des Schienenfahrzeugs zu N aufeinanderfolgenden Zeitpunkten $t_1, ..., t_N$ mit Hilfe eines Magnetometers gemessen. Zugleich werden bei dem Schritt 2.II Geschwindigkeitswerte $v(t_1), ..., v(t_N)$ zu den genannten aufeinanderfolgenden Zeitpunkten $t_1, ..., t_N$ gemessen. Bei dem Schritt 2.III werden im folgenden Krümmungswerte $K(t_1) ... K(t_N)$ des aktuell befahrenen Trajektorienabschnitts für die aufeinanderfolgenden Zeitpunkte $t_1, ... t_N$ berechnet. Die Krümmungswerte $K(t_n)$ (n = 1 ... N) errechnen sich wie folgt:

$$K(t_n) = \frac{\omega(t_n)}{v} \ .$$

Bei dem Schritt 2.IV werden zusätzlich mit Hilfe eines Satellitennavigationssystems grobe Positionswerte $P_{SN}(t_1), ..., P_{SN}(t_N)$ des Schienenfahrzeugs ermittelt sowie eine geographische Karte GK von einem Bereich um die groben aktuellen Positionswerte $P_{SN}(t_1)$,..., $P_{SN}(t_N)$ bereitgestellt. Bei dem Schritt 2.V wird für den Fall, dass sich in dem Bereich eine Weiche befindet, auf Basis der Krümmungswerte $K(t_1)$ ... $K(t_N)$ ermittelt, ob das Schienenfahrzeug eine S-Kurve SK zurückgelegt hat. Ist das der Fall, was in FIG 2 mit "j" gekennzeichnet ist, so wird zu dem Schritt 2.VI übergegangen, bei dem festgestellt wird, dass eine durch die Weiche gebildete Abzweigung AZ genutzt wird. Bei dem Schritt 2.VII wird für den Fall, dass keine S-Kurve SK ermittelt wurde, was in FIG 2 mit "n" gekennzeichnet ist, bei dem Schritt 2.VII festgestellt, dass das Schienenfahrzeug auf der Weiche den geraden Weg G gewählt hat. Die beschriebenen Schritte 2.1 bis 2.VII können während der Fahrt des Schienenfahrzeugs beliebig oft wiederholt werden.

In FIG 3 ist ein Blockdiagramm gezeigt, welches ein Positionsermittlungssystem 30 gemäß einem Ausführungsbeispiel der Erfindung zeigt. Das Positionsermittlungssystem 30 umfasst eine Geschwindigkeitsmesseinrichtung 1, mit der eine aktuelle Geschwindigkeit v eines Fahrzeugs 40 (siehe FIG 4) gemessen wird. Das Positionsermittlungssystem 30 weist auch eine Beschleunigungsmesseinheit 2 auf, mit der eine aktuelle Zentripetalbeschleunigung a des Fahrzeugs 40 gemessen wird. Die Messwerte v, a werden an eine Krümmungsermittlungseinheit 3, welche auf Basis der gemessenen physikalischen Größen v, a eine Krümmung K eines aktuell von dem Fahrzeug 40 befahrenen Trajektorienabschnitts ermittelt. Der Krümmungswert K wird an eine Positionsermittlungseinheit 6 übermittelt. Die Positionsermittlungseinheit 6 erhält von einer Navigationseinheit 4 einen groben Positionswert $P_{SN}$ des Fahrzeugs 40 und von einer Datenbank 5 eine geographische Karte GK, welche einen Bereich um die grobe Position $P_{SN}$ des Fahrzeugs 40 umfasst und darstellt. Die Positionsermittlungseinheit 6 führt im Weiteren einen Vergleich der ermittelten Krümmung K mit Krümmungswerten von Fahrwegen in dem genannten Bereich auf der geographischen Karte GK durch und ermittelt so die korrekte aktuelle geographische Position P(t) des Fahrzeugs 40.

In FIG 4 ist schematisch ein automatisiert gesteuertes Fahrzeug 40 gezeigt. Das Fahrzeug 40 umfasst die in FIG 3 veranschaulichte Positionsermittlungseinrichtung 30. Das Fahrzeug 40 umfasst eine Steuerungseinrichtung 41, welche die von der Positionsermittlungseinrichtung 30 ermittelten Positionsdaten P(t) empfängt und auf deren Basis eine Lenkung 42, einen Motor 43 und eine Bremsanlage 44 ansteuert. Die Steuerungseinrichtung 41 übermittelt hierzu Lenkbefehle LB an die Lenkung 42, Befehle FDB zur Einstellung der Fahrdynamik an den Motor 43 und Bremsbefehle BB an die Bremseinheit 44.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zur Ermittlung einer Position (P(t)) eines Fahrzeugs (40), aufweisend die Schritte:

   - Durchführen einer Echtzeitmessung mindestens einer mit einer Krümmung (K) eines aktuellen Abschnitts einer von dem Fahrzeug (40) zurückgelegten Trajektorie korrelierten physikalischen Größe (a, $\omega$, v, $P_{SN}$), umfassend Positionsinformationen ($P_{SN}$) eines Satellitennavigationssystems,
   - Ermitteln einer Krümmung (K) des aktuellen Abschnitts der Trajektorie des Fahrzeugs (40) auf Basis der mindestens einen physikalischen Größe (a, $\omega$, v, $P_{SN}$) durch Anpassen einer Ausgleichskurve an eine Mehrzahl von mit Hilfe des Satellitennavigationssystems ermittelten Positionen ($P_{SN}(t_1)$, ..., $P_{SN}(t_N)$) des Fahrzeugs (40),
   - Ermitteln einer Position des Fahrzeugs (40) auf einer Karte (GK) durch Vergleich von Krümmungen von auf der Karte (GK) eingezeichneten Fahrwegen mit der ermittelten Krümmung (K).

2. Verfahren nach Anspruch 1, wobei die mindestens eine physikalische Größe eine die Bewegung des Fahrzeugs charakterisierende Größe (a, $\omega$, v) umfasst.

3. Verfahren nach Anspruch 1, wobei die mindestens eine physikalische Größe eine die Position des Fahrzeugs charakterisierende Größe ($P_{SN}$) umfasst.

4. Verfahren nach einem der vorstehenden Ansprüche, wobei

   - als physikalische Größen die longitudinale Geschwindigkeit (v) und die zentripetale Beschleunigung (a) des Fahrzeugs (40) gemessen werden und
   - die Krümmung (K) des aktuellen Abschnitts der Trajektorie des Fahrzeugs (40) durch Bilden eines Quotienten aus der zentripetalen Beschleunigung (a) und dem Quadrat der longitudinalen Geschwindigkeit (v) des Fahrzeugs (40) ermittelt wird.

**5.** Verfahren nach Anspruch 4, wobei die zentripetale Beschleunigung (a) mit Hilfe einer der folgenden Messeinrichtungen ermittelt wird:

- ein Accelerometer,
- eine Schätzeinrichtung mit einem Kalman-Filter.

**6.** Verfahren nach einem der vorstehenden Ansprüche, wobei

- als physikalische Größen die longitudinale Geschwindigkeit (v) und die Winkelgeschwindigkeit (ω) des Fahrzeugs (40) gemessen werden und
- die Krümmung (K) des aktuellen Abschnitts der Trajektorie des Fahrzeugs (40) durch Bilden eines Quotienten aus der Winkelgeschwindigkeit (ω) des Fahrzeugs (40) und der longitudinalen Geschwindigkeit (v) des Fahrzeugs (40) ermittelt wird.

**7.** Verfahren nach Anspruch 6, wobei die Winkelgeschwindigkeit (ω) mit Hilfe einer der folgenden Messeinrichtungen ermittelt wird:

- ein Gyroskop,
- ein Magnetometer,
- eine Schätzeinrichtung mit einem Kalman-Filter.

**8.** Verfahren nach einem der vorstehenden Ansprüche, wobei auf Basis der ermittelten Krümmung (K) ermittelt wird, welchen Weg ein Fahrzeug (40) an einer Abzweigung nimmt.

**9.** Positionsermittlungssystem (30), aufweisend:

- eine Messeinheit (1, 2) zum Durchführen einer Echtzeitmessung mindestens einer mit einer Krümmung eines aktuellen Abschnitts einer von einem Fahrzeug (40) zurückgelegten Trajektorie korrelierten physikalischen Größe (a, ω, v, $P_{SN}$), welche Positionsinformationen ($P_{SN}$) eines Satellitennavigationssystems umfasst,
- eine Krümmungsermittlungseinheit (3) zum Ermitteln einer Krümmung (K) des aktuellen Abschnitts der Trajektorie des Fahrzeugs (40) auf Basis der mindestens einen physikalischen Größe (a, ω, v, $P_{SN}$) durch Anpassen einer Ausgleichskurve an eine Mehrzahl von mit Hilfe des Satellitennavigationssystems ermittelten Positionen ($P_{SN}(t_1)$, ..., $P_{SN}(t_N)$) des Fahrzeugs (40),
- eine Positionsermittlungseinheit (6) zum Ermitteln einer Position (P(t)) des Fahrzeugs (40) auf einer Karte (GK) durch Vergleich von Krümmungen von auf der Karte (GK) eingezeichneten Fahrwegen mit der ermittelten Krümmung (K).

**10.** Fahrzeug (40), vorzugsweise Kraftfahrzeug, aufweisend ein Positionsermittlungssystem (30) nach Anspruch 9.

**11.** Computerprogrammprodukt mit einem Computerprogramm, welches direkt in eine Speichereinheit einer Rechnereinheit eines Fahrzeugs (40) ladbar ist, mit Programmabschnitten, um alle Schritte eines Verfahrens nach einem der Ansprüche 1 bis 8 auszuführen, wenn das Computerprogramm in der Rechnereinheit ausgeführt wird.

**12.** Computerlesbares Medium, auf welchem von einer Rechnereinheit ausführbare Programmabschnitte gespeichert sind, um alle Schritte des Verfahrens nach einem der Ansprüche 1 bis 8 auszuführen, wenn die Programmabschnitte von der Rechnereinheit ausgeführt werden.

## FIG 1

100

# FIG 2

200

2.I

2.II

$\omega(t_1)$
...
$\omega(t_N)$

$V(t_1)$
...
$V(t_N)$

2.III

2.IV

$K(t_1)$
...
$K(t_N)$

$P_{SN}(t_1)$
...
$P_{SN}(t_N)$

GK

2.V     SK?     n

j

2.VI    AZ

2.VII    G

## FIG 3

## FIG 4

Europäisches
Patentamt

European
Patent Office

Office européen
des brevets

# EUROPÄISCHER RECHERCHENBERICHT

Nummer der Anmeldung

EP 18 21 1300

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HEIRICH OLIVER ET AL: "Onboard Train Localization with Track Signatures: Towards GNSS Redundancy", GNSS 2017 - PROCEEDINGS OF THE 30TH INTERNATIONAL TECHNICAL MEETING OF THE SATELLITE DIVISION OF THE INSTITUTE OF NAVIGATION (ION GNSS+ 2017), THE INSTITUTE OF NAVIGATION, 8551 RIXLEW LANE SUITE 360 MANASSAS, VA 20109, USA, 29. September 2017 (2017-09-29), Seiten 3231-3237, XP056014495, * Abbildungen 2,7 * * Abschnitte: Introduction; Onboard Train Localization Methods Based on GNSS; Track Signatures; Curvature Signatures; Onboard Train Localization Methods Based on Track Signatures; Train Speed Estimation Method without GNSS and Speed Sensor; Onboard Train Localization Concept with GNSS Redundancy. * ----- | 1-12 | INV. G01S19/50 G01S19/39 G01C21/30 |
| X | US 2012/150437 A1 (ZENG SHUQING [US] ET AL) 14. Juni 2012 (2012-06-14) * Abbildungen 2A, 2B, 7-9, 10A-10C * * Absätze [0034] - [0052], [0082] - [0104], [0120] - [0123] * ----- | 1-12 | |
| X | EP 2 796 337 A1 (DEUTSCHES ZENTRUM FÜR LUFT UND RAUMFAHRT E V [DE]) 29. Oktober 2014 (2014-10-29) * Abbildungen 5, 8 * * Gleichungen (15)-(17) * * Absätze [0031] - [0034], [0060] - [0069], [0084] - [0100] * ----- | 1-12 | |

RECHERCHIERTE SACHGEBIETE (IPC)

G01S
G01C
B61L

Der vorliegende Recherchenbericht wurde für alle Patentansprüche erstellt

| Recherchenort | Abschlußdatum der Recherche | Prüfer |
|---|---|---|
| München | 12. April 2019 | Tancredi, Urbano |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 21 1300

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2019

| Im Recherchenbericht angeführtes Patentdokument | Datum der Veröffentlichung | Mitglied(er) der Patentfamilie | Datum der Veröffentlichung |
|---|---|---|---|
| US 2012150437 A1 | 14-06-2012 | CN 102529975 A<br>DE 102011120497 A1<br>US 2012150437 A1 | 04-07-2012<br>14-06-2012<br>14-06-2012 |
| EP 2796337 A1 | 29-10-2014 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7756634 B2
- US 20070078594 A1
- DE 69219006 T2
- DE 19830331 B4
- US 6473690 B1
- US 9733092 B2
- WO 2016153435 A1